# EUROPÄISCHE PATENTSCHRIFT

(11) **EP 0 478 098 B1**
(45) Veröffentlichungstag und Bekanntmachung des Hinweises auf die Patenterteilung: **23.10.1996**
(21) Anmeldenummer: 91250237.4
(22) Anmeldetag: 28.08.1991
(51) Int. Cl.: H02B 11/28, H02B 13/075

(54) **Gasisolierte Mittelspannungs-Schaltanlage mit Durchführungen zur Herstellung einer äusseren Erdverbindung**
Gas insulated medium voltage switchgear with feed-troughs for realising an external earthing connection
Installation de commutation blindée a moyenne tension avec des traversées pour la réalisation une connection externe à la terre

(30) Priorität: 28.09.1990 DE 4031196
(43) Veröffentlichungstag der Anmeldung: 01.04.1992
(73) Patentinhaber: SIEMENS AKTIENGESELLSCHAFT, 80333 München (DE)
(72) Erfinder: Simon, Gerhard, W-6109 Mühltal (DE); Schweppe, Friedrich, W-6116 Eppertshausen (DE)

(56) Entgegenhaltungen:
- DE-A- 3 513 499
- GB-A- 559 040
- GB-A- 2 091 942
- US-A- 3 876 846

## Beschreibung

Die Erfindung betrifft eine gasisolierte und gekapselte Mittelspannungs-Schaltanlage mit einem Erdungsschalter und mit in einer Reihe angeordneten Durchführungen zur Herstellung einer Erdverbindung außerhalb des Gasraumes mittels einer lösbar angeordneten Verbindungsschiene. Eine Schaltanlage dieser Art ist durch die DE-C-34 36 084 bekannt geworden. Für jede der Durchführungen ist eine abgewinkelte Verbindungsschiene vorgesehen, die eine an der Kapselung angebrachte Erdanschlußklemme mit einer äußeren Kontaktfläche der Durchführung verbindet. Im Bedarfsfall können die Verbindungsschienen gelöst werden, um an die Durchführungen eine Kabelmeß- und Prüfeinrichtung anzuschließen.

Aus der DE 35 13 499 Al ist ebenfalls eine gasisolierte und gekapselte Mittelspannungs-Schaltanlage bekannt, bei der mehrere Durchführungen mittels einer Verbindungsschiene gemeinsam mit Erdpotential verbunden werden können. Die Verbindungsschiene ist lösbar angeordnet, so daß bei entfernter Verbindungsschiene für jeden Pol die eigene Durchführung separat zugänglich ist.

Außerdem ist durch die US 3 876 846 eine kombinierte Erdungs- und Test-Schalteinrichtung offenbart, die über ein bewegbares Kontaktstück Erdpotential auf andere Kontaktstücke schalten kann. Dabei steht der bewegliche Kontaktteil über einen flexiblen Metallverbinder mit einem nach außen geführten feststehenden Kontaktbolzen in Verbindung, der durch eine lösbare Verbindung durch Befestigungsmuttern mit einem Erdungsträger verbunden ist. Allerdings handelt sich es hier um keine mehrpolige Durchführung.

Der Erfindung liegt die Aufgabe zugrunde, nach Beendigung einer Kabelprüfung sicherzustellen, daß alle zur ordnungsgemäßen Wiederherstellung der Erdverbindung erforderlichen Schritte zwangsläufig und fehlerfrei durchgeführt werden.

Zur Lösung dieser Aufgabe sieht die Erfindung vor, daß jede Durchführung an ihrer Außenseite einen Kontaktbolzen mit einem zylindrischen Abschnitt aufweist, der einer Gleitkontakteinheit einer für alle Durchführungen gemeinsamen Kurzschlußschiene angepaßt ist, die durch einen biegsamen Leiter mit der Erdanschlußklemme verbunden ist und daß die Kontaktbolzen anschließend an den zylindrischen Abschnitt einen Endteil zur Aufnahme eines eine Entfernung der Kurzschlußschiene sperrenden Sicherungsgliedes besitzen. Dadurch, daß eine gemeinsame Kurzschlußschiene mit Gleitkontakten benutzt wird, ist zunächst sichergestellt, daß alle Kontaktbolzen mit der Kurzschlußschiene gleichzeitig in eine zuverlässig leitende Verbindung gelangen. Gleichzeitig wird die Erdverbindung dadurch gewährleistet, daß die Kurzschlußschiene ständig durch den biegsamen Leiter mit der festen Erdanschlußklemme verbunden ist; die bei dem Anschluß einer Kabelprüf- und Meßeinrichtung an die Durchführungen nicht gelöst werden muß. Nach dem Aufsetzen der Kurzschlußschiene auf die Kontaktbolzen der Durchführungen verhindert das Sicherungsglied eine Verschiebung der Kurzschlußschiene auf den Kontaktbolzen der Durchführungen durch willkürliche oder sonstige Einflüsse.

Als vorteilhaft für die Handhabung des Sicherungsgliedes erweist es sich, wenn der Endteil jedes Kontaktbolzens eine Ringnut besitzt und das Sperrglied als Schiene mit einer Dicke entsprechend der Breite der Ringnut ausgebildet und mit schlüssellochartigen Öffnungen versehen ist, deren weiter Abschnitt dem Außendurchmesser des Kontaktbolzens und deren enger Abschnitt dem Kerndurchmesser der Ringnut entspricht. Auf diese Weise läßt sich das Sperrglied durch Aufstecken auf die Kontaktbolzen und anschließende Längsverschiebung zuverlässig sichern. Es empfiehlt sich in diesem Zusammenhang, die Durchführungen vertikal übereinander anzuordnen und die schlüssellochartigen Öffnungen des Sperrgliedes umgekehrt, d. h. mit obenliegendem engen Abschnitt anzuordnen. Auf diese Weise gelangt das Sperrglied unter dem Einfluß der Schwerkraft selbsttätig in die sichere Stellung.

Wird ferner das Sperrglied im Querschnitt U-förmig gestaltet derart, daß die Schenkel in der Sperrstellung an der Kurzschlußschiene anliegen, so wird eine zuverlässige Abstützung der Kurzschlußschiene gegenüber evtl. auftretenden Kräften erzielt.

Zur Gewährleistung der Sicherheit kann ferner dadurch beigetragen werden, daß die Durchführungen frontseitig an der Schaltanlage angeordnet sind und daß in dem Sperrglied eine Befestigungsöffnung für eine die Durchführungen verdeckende Abdeckhaube angeordnet ist. Zusätzlich kann die Abdeckhaube eine keilartige Schrägfläche zur Betätigung einer die Betätigung des Erdungsschalters freigebenden oder sperrenden Verriegelungsblende besitzen.

Die Erfindung wird im folgenden anhand der Figuren näher erläutert.

Die Figur 1 zeigt schematisch einen Teil einer Mittelspannungs-Lastschaltanlage mit frontseitig angeordneten Durchführungen zur Erdung bzw. Kabelprüfung in einer Seitenansicht.

Die Figur 2 zeigt die Anordnung gemäß der Figur 1 in der Draufsicht.

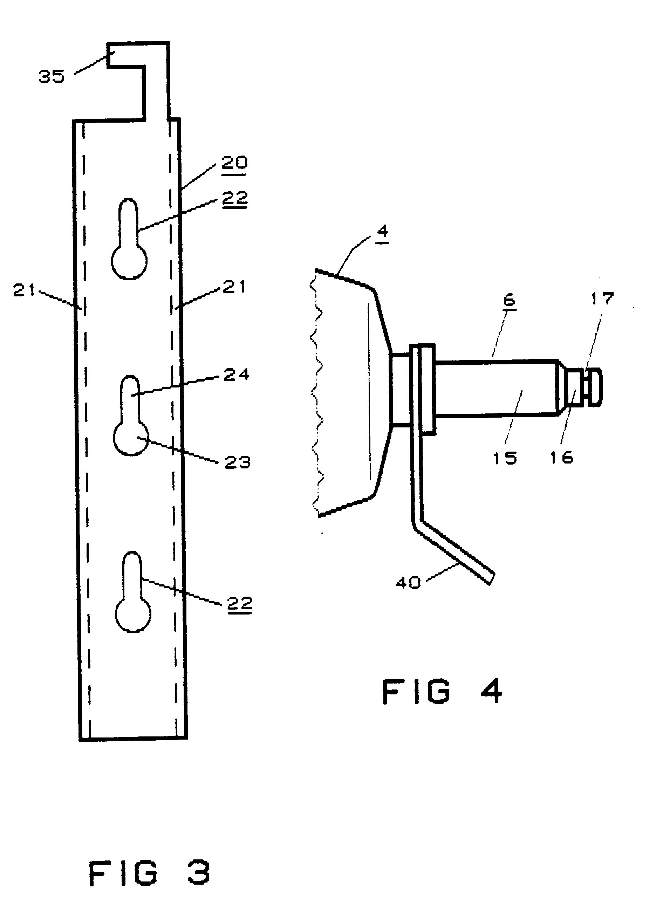

Ein Sperrglied ist gesondert in der Figur 3 dargestellt.

Den äußeren Teil einer Durchführung zeigt die Figur 4.

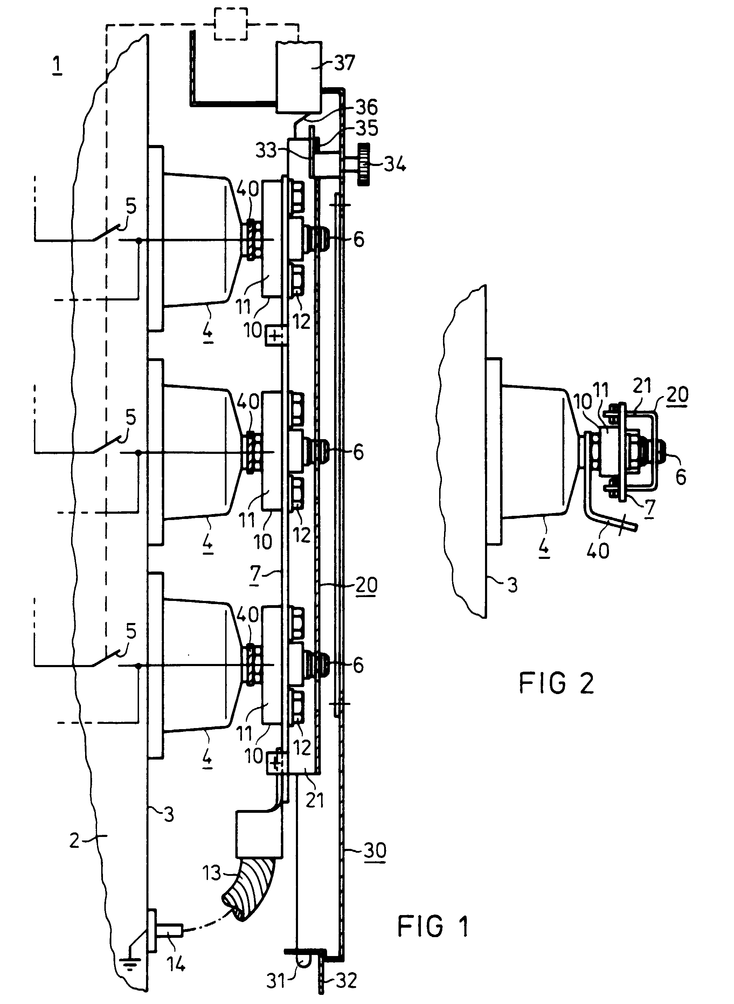

Die in der Figur 1 teilweise gezeigte Mittelspannungs-Lastschaltanlage weist einen abgebrochen dargestellten gasgefüllten Behälter 2 auf, an dessen Frontwand 3 in einer vertikalen Reihe drei Durchführungen 4 angeordnet sind. Die Durchführungsleiter stehen mit einem Erdungsschalter 5 in Verbindung, der lediglich als Schaltsymbol dargestellt ist. In bekannter Weise kann der Erdungsschalter Bestandteil eines Mehrstellungs-Drehschalters sein. Die Erdung wird außerhalb des Gasraumes des Behälters 2 durch eine Vorrichtung hergestellt, die im folgenden näher beschrieben wird. Wie die Figuren 1 und 4 zeigen, besitzt jede der Durchführungen 4 einen Kontaktbolzen 6, der sich horizontal nach vorn erstreckt. Die drei vorhandenen Kontaktbolzen 6 sind durch eine Kurzschlußschiene 7 (Figuren 1 und 2) miteinander verbunden, die zur Kontaktgabe mit jedem der Kontaktbolzen 6 mit je einer Gleitkontakteinheit 10 versehen ist. Geeignete Gleitkontakteinheiten sind in verschiedenen Ausführungen bekannt und werden daher im vorliegenden Zusammenhang nicht näher beschrieben. Erwähnt sei jedoch, daß jede der Gleitkontakteinheiten 10 einen Gehäusekörper 11 aufweist, in welchem die eigentlichen Kontaktelemente untergebracht sind. Die Gehäusekörper 11 sind mittels Schrauben 12 an der Kurzschlußschiene 7 so befestigt, daß der gegenseitige Abstand der Gleitkontakteinheiten 10 im Rahmen einer evtl. auftretenden Toleranz des Abstandes der Kontaktbolzen 6 verändert werden kann. Am unteren Ende der Kurzschlußschiene 7 ist ein biegsamer Leiter 13 befestigt, der in nicht näher dargestellter Weise mit einer ortsfesten Erdanschlußklemme 14 verbunden ist. Diese befindet sich in dem gezeigten Beispiel gleichfalls an der Frontwand 3 des Behälters 2.

Wie insbesondere aus der Figur 4 näher zu ersehen ist, weist jeder der Kontaktbolzen 6 der Durchführungen 4 einen zur Kontaktgabe mit den Gleitkontakteinheiten 10 vorgesehenen Abschnitt 15 sowie einen im Durchmesser verringerten Endteil 16 auf, der mit einer Ringnut 17 versehen ist. Mit den Ringnuten 17 der drei Druchführungen 4 wirkt ein Sperrglied 20 zusammen, das ein U-förmiges Profil mit Schenkeln 21 aufweist. Für jeden der Kontaktbolzen 6 ist eine schlüssellochartige Öffnung 22 vorhanden. Zum Durchtritt des Endteiles 16 jedes Kontaktbolzens 6 besitzen die Öffnungen 22 einen entsprechend bemessenen weiten Bereich 23, an den sich ein engerer Bereich 24 mit einer Breite entsprechend dem Kerndurchmesser der Nut 17 anschließt. Die in der Figur 3 gezeigte Lage des weiten Abschnittes 23 und des engen Abschnittes 24 der Öffnung 22 entspricht der Gebrauchslage. Wird somit das Sperrglied 20 auf die Kontaktbolzen 6 aufgesteckt, so gelangt das Sperrglied 20 unter dem Einfluß der Schwerkraft mit dem engen Bereich 24 der Öffnungen 22 in die Ringnuten 17 der Kontaktbolzen 6. Dieser Vorgang ist einfach durchführbar, weil die Schenkel 21 des Sperrgliedes 20 gegen die Kurzschlußschiene 7 stoßen und hierdurch die richtige Lage des Sperrgliedes 20 für das Eingreifen in die Ringnuten 17 gewährleistet ist.

Zur Abdeckung der Durchführungen 4 dient eine Abdeckhaube 30, die an ihrem unteren Ende mit einem Zapfen 31 in einen Querträger 32 der Schaltanlage 1 einhängbar ist. Am oberen Ende befindet sich ein Schwenkriegel 33, der durch einen Drehgriff 34 betätigbar ist und der mit einer Sperrnase 35 des Sperrgliedes 20 zusammenwirkt. Hierdurch ergibt sich die in der Figur 1 gezeigte Stellung der Abdeckhaube 30, in der eine Schrägfläche 36 der Abdeckhaube 30 eine Verriegelungsblende 37 im Sinne der Freigabe des Erdungsschalters 5 angehoben ist. Das Zusammenwirken zwischen der Verriegelungsblende 37 und dem Erdungsschalter 5 ist in der Figur 1 gestrichelt angedeutet.

In den Figuren 1 und 2 ist der normale Betriebszustand der Lastschaltanlage 1 gezeigt, in der die Kontaktbolzen 6 der Durchführungen 4 miteinander verbunden und geerdet sind. Die Abdeckhaube 30 ist vorschriftsmäßig angebracht. Der Erdungsschalter 5 kann im Bedarfsfall betätigt werden. Soll nun eine Prüfung der an die Lastschaltanlage angeschlossenen Kabel durchgeführt werden, so sind folgende Schritte vorzunehmen, um an die Kontaktbolzen 6 eine Prüfspannung anlegen zu können:
1. Entfernen der Abdeckhaube 30 nach Betätigen des Schwenkriegels 35 mittels des Drehgriffes 34. Die Verriegelungsblende 36 gelangt hierdurch in eine Stellung, in der die Betätigung des Erdungsschalters 5 gesperrt ist.
2. Entriegeln des Spergliedes durch Anheben und Abnehmen nach vorn.
3. Abziehen der nun zugänglichen Kurzschlußschiene 7 von den Kontaktbolzen 6 nach vorn Durch die Verbindung des biegsamen Leiters 13 mit der ortsfesten Erdanschlußklemme 14 ist jedoch eine weitere Entfernung der Kurzschlußschiene 7 von der Schaltanlage 1 ausgeschlossen.
4. An die aus den Figuren 2 und 4 ersichtlichen Anschlußwinkel 40, die auf den Kontaktbolzen 6 sitzen, kann nun eine Prüfleitung angeschlossen werden.

Nach Abschluß der Kabelprüfung läßt sich der ursprüngliche Zustand auf einfache Weise ohne Zuhilfenahme von Werkzeugen rasch und zuverlässig wieder herstellen. Dadurch, daß die Kurzschlußschiene 7 mit den Kontaktbolzen durch Gleitkontakteinheiten 10 in Verbindung gebracht wird, entfällt jede Unsicherheit, wie sie bei der Herstellung von Schraubverbindungen auftreten kann. Auch ist die Möglichkeit der Wiederinbetriebnahme mit dem ordnungsgemäßen Anbringen der Abdeckhaube zwangsläufig verknüpft.

## Patentansprüche

1. Gasisolierte und gekapselte Mittelspannungs-Schaltanlage (1) mit einem Erdungsschalter (5) und mit in einer Reihe angeordneten Durchführungen (4) zur Herstellung einer Erdverbindung außerhalb des Gasraumes mittels einer lösbar angeordneten Kurzschlußschiene (7),
**dadurch gekennzeichnet,** daß jede Durchführung (4) an ihrer Außenseite einen Kontaktbolzen (6) mit einem zylindrischen Abschnitt (15) aufweist, der eine Gleitkontakteinheit (10) einer für alle Durchführungen (4) gemeinsamen Kurzschlußschiene (7) angepaßt ist, die durch einen biegsamen Leiter (13) mit einer Erdanschlußklemme (14) verbunden ist und daß die Kontaktbolzen (6) anschließend an den zylindrischen Abschnitt (15) einen Endteil (16) zur Aufnahme eines eine Entfernung der Kurzschlußschiene (7) sperrenden Sicherungsgliedes (20) besitzen.

2. Mittelspannungs-Schaltanlage nach Anspruch 1,
**dadurch gekennzeichnet,** daß der Endteil (16) jedes Kontaktbolzens (6) eine Ringnut (17) besitzt und daß das Sperrglied (20) als Schiene mit einer Dicke entsprechend der Breite der Ringnut (17) ausgebildet und mit schlüssellochartigen Öffnungen (22) versehen ist, deren weiter Abschnitt (23) dem Außendurchmesser des Endteiles (16) des Kontaktbolzens (6) und deren enger Abschnitt (24) dem Kerndurchmesser der Ringnut (17) entspricht.

3. Mittelspannungs-Schaltanlage nach Anspruch 2,
**dadurch gekennzeichnet,** daß die Durchführungen (4) vertikal übereinander angeordnet sind und daß die schlüssellochartigen Öffnungen (22) des Sperrgliedes (20) umgekehrt, d. h. mit obenliegendem engen Abschnitt (24) angeordnet sind, derart, daß das Sperrglied (20) unter dem Einfluß der Schwerkraft selbsttätig in eine verriegelte Stellung gelangt.

4. Mittelspannungs-Schaltanlage nach Anspruch 3,
**dadurch gekennzeichnet**, daß das Sperrglied (20) im Querschnitt U-förmig gestaltet ist und daß die Schenkel (21) des Sperrgliedes (20) in der Sperrstellung an der Kurzschlußschiene (7) anliegen.

5. Mittelspannungs-Schaltanlage nach einem der vorangehenden
Ansprüche, **dadurch gekennzeichnet**, daß die Durchführungen (4) frontseitig an der Schaltanlage (1) angeordnet sind und daß an dem Sperrglied (20) eine Schließnase (35) für eine die Durchführungen (4) verdeckende Abdeckhaube (30) angeordnet ist.

6. Mittelspannungs-Schaltanlage nach Anspruch 5,
**dadurch gekennzeichnet**, daß die Abdeckhaube (30) eine keilartige Schrägfläche (36) zum Verschieben einer die Betätigung des Erdungsschalters (5) freigebenden oder sperrenden Verriegelungsblende (37) besitzt.

## Claims

1. Gas-insulated, enclosed medium-voltage switchgear (1) having an earthing switch (5) and bushings (4) arranged in a row for producing an earth connection outside the gas-filled space by means of a short-circuiting bar (7) arranged in a detachable manner, **characterised in that** on the outside of each bushing (4) there is a contact stud (6) with a cylindrical section (15) matched to a sliding contact unit (10) of a short-circuiting bar (7) which is common to all of the bushings (4) and which is connected by means of a flexible conductor (13) to the earth terminal (14), and in that the contact studs (6) have, adjacent to the cylindrical section (15), an end part (16) for receiving a safety element (20) that prevents the short-circuiting bar (7) from moving away.

2. Medium-voltage switchgear according to claim 1, **characterised in that** the end part (16) of each contact stud (6) has a ring groove (17), and in that the blocking element (20) is formed as a bar having a thickness that corresponds to the width of the ring groove (17) and is provided with keyhole-shaped openings (22) whose wide section (23) matches the outer diameter of the end part (16) of the contact stud (6) and whose narrow section (24) matches the core diameter of the ring groove (17).

3. Medium-voltage switchgear according to claim 2, **characterised in that** the bushings (4) are arranged vertically one above another and in that the keyhole-shaped openings (22) of the blocking element (20) are arranged the other way round, that is, with the narrow section (24) uppermost, in such a way that the blocking element (20) slips automatically into a locked position under the effect of gravity.

4. Medium-voltage switchgear according to claim 3, **characterised in that** the cross-section of the blocking element (20) is U-shaped and in that the limbs (21) of the blocking element (20) rest against the short-circuiting bar (7) in the blocking position.

5. Medium-voltage switchgear according to one of the preceding claims, **characterised in that** the bushings (4) are arranged at the front of the switchgear (1) and in that a closing lug (35) for an outer casing (30) covering the bushings (4) is arranged on the blocking element (20).

6. Medium-voltage switchgear according to claim 5, **characterised in that** the outer casing (30) has a wedge-shaped inclined surface (36) for displacing a locking cover (37) that releases or blocks the actuation of the earthing switch (5).

## Revendications

1. Installation (1) de coupure moyenne tension isolée au gaz et blindée, comportant un interrupteur (5) de mise à la terre et des traversées (4) disposées en un rang et destinées à l'établissement d'une liaison à la terre en dehors de la chambre de gaz au moyen d'un rail (7) de court-circuit amovible,
caractérisée en ce que chaque traversée (4) comporte à son côté extérieur un axe (6) de contact, qui a un tronçon (15) cylindrique et auquel est adaptée une unité (10) de contact glissant d'un rail (7) de court-circuit commun à toutes les traversées (4), lequel rail est relié par un conducteur (13) flexible à une borne (14) de raccordement à la terre et les axes (6) de contact comprennent, à la suite du tronçon cylindrique (15) une partie (16) d'extrémité destinée à la réception d'un élément (20) de blocage empêchant le rail (7) de court-circuit de s'éloigner.

2. Installation de coupure moyenne tension suivant la revendication 1,
caractérisée en ce que la partie (16) d'extrémité de chaque axe (6) de contact comporte une rainure (17) annulaire, l'élément (20) de blocage est sous forme d'un rail ayant une épaisseur correspondant à l'épaisseur de la rainure (17) annulaire et est muni d'ouvertures (22) en forme de trou de serrure, dont la partie large (23) correspond au diamètre extérieur de la partie (16) d'extrémité de l'axe (6) de contact et dont la partie étroite (24) correspond au diamètre du noyau de la rainure (17) annulaire.

3. Installation de coupure moyenne tension suivant la revendication 2,
caractérisée en ce que les traversées (4) sont disposées verticalement l'une au-dessus de l'autre et les ouvertures (22), en forme de trou de serrure, de l'élément (20) de blocage sont inversées, c'est-à-dire sont disposées en ayant leurs parties étroites (24) en haut, de manière que l'élément (20) de blocage parvienne automatiquement dans une position verrouillée sous l'influence de la pesanteur.

4. Installation de coupure moyenne tension suivant la revendication 3,
caractérisée en ce que l'élément (20) de blocage a une section en forme de U et les branches (21) de l'élément (20) de blocage s'appliquent, dans la position de blocage, au rail (7) de court-circuit.

5. Installation de coupure moyenne tension suivant l'une des revendications précédentes, caractérisée en ce que les traversées (4) sont disposées du côté frontal sur l'installation (1) de coupure et il est disposé sur l'élément (20) de blocage un bec (35) de fermeture pour un capuchon (30) de couverture recouvrant les traversées (4).

6. Installation de coupure moyenne tension suivant la revendication 5,
caractérisée en ce que le capuchon (30) de couverture a une surface oblique (36) cunéiforme pour le déplacement d'un obturateur (37) de verrouillage libérant ou bloquant l'actionnement de l'interrupteur (5) de mise à la terre.
